# EUROPÄISCHE PATENTANMELDUNG

(11) **EP 3 121 096 A1**
(43) Veröffentlichungstag der Anmeldung: **25.01.2017**
(21) Anmeldenummer: 16181076.7
(22) Anmeldetag: 25.07.2016
(51) Int. Cl.: B62J 1/18, B62H 5/00, B62H 5/20, B62J 1/28, B61J 1/00

(54) **ZWEIRADSATTEL**

(30) Priorität: 24.07.2015 DE 202015103905 U
(71) Anmelder: Büchel GmbH & Co. Fahrzeugteilefabrik KG, 36039 Fulda (DE)
(72) Erfinder: Greifenegg, Hans Michael, 36079 Fulda (DE)
(74) Vertreter: Puschmann Borchert Bardehle Patentanwälte Partnerschaft mbB

(57) **Zusammenfassung**

Die Erfindung betrifft einen Zweiradsattel mit einer Schale (2), mit einer darüber angeordneten elastischen Füllung (3) und mit einer Satteldecke (6), die die elastische Füllung (3) abdeckt. Der Zweiradsattel ist dadurch gekennzeichnet, dass zwischen der Satteldecke (6; 11; 17) und der elastischen Füllung (3) ein elektronischer ID- Transponderchip (7; 15; 20) mit einer Antenne, einem Datenspeicher und einer Transponderschaltung angeordnet ist.

## Beschreibung

Die Erfindung betrifft einen Zweiradsattel, der eine Schale, eine darüber angeordnete elastische Füllung und eine Satteldecke umfasst, die die Füllung abdeckt.

Bei hochwertigen, technischen Produkten ist es üblich, mit dem Produkt eine produktbezogene Information, beispielsweise eine Information über den Hersteller, den Produktnamen, Montage- und Pflege des Produkts mitzuliefern. Die produktbezogene Information kann dabei Etiketten, Montage- und Pflegeanleitungen und auch sogenannte elektronische Etiketten, wie ID-Transponderchips, umfassen. Bei Fahrradsätteln handelt es sich um derartige hochwertige Produkte, wobei sich jedoch bei der Verwendung von ID-Transponderchips das Problem ergibt, dass das Ansprechverhalten des ID-Transponderchips durch Metallteile des Fahrradsattels beeinflusst wird. Ein weiteres Problem bei hochwertigen technischen Produkten wie Fahrradsätteln besteht darin, dass einerseits viel Zeit und Mühe darauf verwendet wird, die Fahrradsättel technisch zu verbessern und das Design so ansprechend wie möglich zu verwirklichen, und dass diese Leistungen andererseits durch Kopien, die in der Regel auch technische Schutzrechte verletzen, beeinträchtigt werden. Daher ist erwünscht, gegen derartige Raubkopien vorgehen zu können.

Im Hinblick auf das Vorstehende ist es daher Aufgabe der Erfindung, einen Zweiradsattel bereitzustellen, bei dem die produktbezogene Information durch einen ID-Transponderchip mitgeliefert wird, der ohne Beeinträchtigung des Ansprechverhaltens ausgelesen werden kann.

Dazu ist der erfindungsgemäße Zweiradsattel mit einer Schale, mit einer darüber angeordneten elastischen Füllung und mit einer Satteldecke, die die elastische Füllung abdeckt, dadurch gekennzeichnet, dass zwischen der Satteldecke und der elastischen Füllung ein elektronischer ID-Transponderchip mit einer Antenne, einem Datenspeicher und einer Transponderschaltung angeordnet ist. Indem der ID-Transponderchip zwischen der Satteldecke und der elastischen Füllung angeordnet wird, ist er durch Kunststoffe eingehüllt und genügend weit von den Metallteilen des Zweiradsattels entfernt, damit keine Beeinflussung des ID-Transponderchips durch die Metallteile erfolgen kann. Außerdem wird durch das Vorhandensein des Chips auch die Feststellung erleichtert, ob der betreffende Zweiradsattel ein mit dem Chip ausgestattetes Originalprodukt oder eine Kopie ist.

Nach einer vorteilhaften Ausführung der Erfindung ist der Zweiradsattel dadurch gekennzeichnet, dass der elektronische ID-Transponderchip ein vorzugsweise passiver RFID-Transponderchip ist, oder dass der elektronische ID-Transponderchip ein vorzugsweise passiver NFC-Transponderchip ist. Damit wird die bewährte RFID-Technologie (radio-frequency identification) bzw. auch die NFC-Technologie (Nahfeldkommunikation) zum Zwecke der Erfindung eingesetzt. Die passive Ausführung des RFID-Transponderchips bzw. des NFC-Transponderchips ist bei Zweiradsätteln deshalb vorteilhaft, weil in dem Chip keine Batterie erforderlich ist, um den Chip mit elektrischer Energie zu versorgen. Bei RFID-Transponderchips und bei NFC-Transponderchips beträgt außerdem die Reichweite wenige Zentimeter, sodass das Lesegerät sich in unmittelbarer Nähe des Chips befinden muss, wodurch Fremdeinflüsse herabgesetzt werden.

Nach einer weiteren vorteilhaften Ausführung der Erfindung ist der Zweiradsattel dadurch gekennzeichnet, dass der Datenspeicher einen Link-Speicherbereich aufweist, in dem eine Link-Information zu einer Webpage gespeichert ist. Indem ein Verbindungsaufbau zu einer Webpage ermöglicht wird, kann die produktbezogene Information leicht dadurch auf den neuesten Stand gebracht werden, dass die Webpage aktualisiert wird.

Nach einer weiteren vorteilhaften Ausführung der Erfindung ist der Zweiradsattel dadurch gekennzeichnet, dass die Link-Information zu einer Webpage durch ein Mobil-Kommunikationsgerät zu nutzen ist, um die Webpage aufzurufen. Dadurch wird in vorteilhafter Weise erreicht, dass die produktbezogene Information unabhängig von einem festinstallierten Lesegerät genutzt werden kann.

Nach einer weiteren vorteilhaften Ausführung der Erfindung ist der Zweiradsattel dadurch gekennzeichnet, dass der Speicher des Weiteren einen Produktinformations-Speicherbereich aufweist, in dem eine auf den Zweiradsattel bezogene Produktinformation gespeichert ist. Damit wird in vorteilhafter Weise ermöglicht, direkt auf die produktbezogene Information zuzugreifen, die in dem Chip gespeichert ist, um beispielsweise Raubkopien des Produkts zu erkennen.

Nach einer weiteren vorteilhaften Ausführung der Erfindung ist der Zweiradsattel dadurch gekennzeichnet, dass der elektronische ID-Transponderchip an einer vordefinierten Stelle unter der Satteldecke, beispielsweise im Sitzbereich des Zweiradsattels, angeordnet ist. Dadurch wird in vorteilhafter Weise das Auffinden des Chips erleichtert, und man muss mit anderen Worten nicht den gesamten Zweiradsattel mit dem Kommunikationsgerät abtasten, um den Chip zu finden.

Nach einer weiteren vorteilhaften Ausführung der Erfindung ist der Zweiradsattel, bei dem die Satteldecke mindestens eine Öffnung aufweist, die durch eine dekorative Dekorfolie verschlossen ist, und bei dem eine Deckschicht auf der der elastischen Füllung zugewandten Seite der Dekorfolie vorgesehen ist, dadurch gekennzeichnet, dass der elektronische ID-Transponderchip zwischen der transparenten Dekorfolie und der Deckschicht angeordnet ist. Dadurch wird in vorteilhafter Weise das Auffinden des Chips an dem Zweiradsattel erleichtert, weil die Dekorfolie transparent ausgeführt ist, sodass man den Chip durch die Dekorfolie hindurch sehen kann. Damit wird auch die Feststellung erleichtert, ob der betreffende Zweiradsattel ein mit dem Chip ausgestattetes Originalprodukt oder eine Kopie ist.

Nach einer weiteren vorteilhaften Ausführung der Erfindung ist der Zweiradsattel dadurch gekennzeichnet, dass die Deckschicht der Dekorfolie eine Lackschicht, eine mit der Dekorfolie verbundene Deckfolie, eine PVC-, PP- oder PE-Folie oder ein Textilmaterial ist, wobei derartige Materialien sich besonders für das Verschweißen und die Betriebsverhältnisse bei Zweiradsätteln eignen.

Nach einer weiteren vorteilhaften Ausführung der Erfindung ist der Zweiradsattel dadurch gekennzeichnet, dass die Dekorfolie passgenau in die Öffnung der Satteldecke eingebracht ist und sich auf gleicher Höhe wie die Satteldecke befindet, oder dass die Dekorfolie unterhalb der Öffnung der Satteldecke angeordnet und an der Unterseite der Satteldecke befestigt ist. In beiden Fällen wird der Einbau des Chips in die Satteldecke erleichtert, indem der Chip bei dem Aufbau der Öffnung bzw. deren Abdeckung mit in die Satteldecke eingebracht werden kann.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine perspektivische Ansicht eines erfindungsgemäßen Zweiradsattels;
- Fig. 2: eine Schnittdarstellung durch den erfindungsgemäßen Zweiradsattel entlang der Linie I-I in Fig. 1;
- Fig. 3: eine perspektivische Ansicht eines erfindungsgemäßen Zweiradsattels mit zwei durch Dekorfolie verschlossene Öffnungen;
- Fig. 4: eine Schnittdarstellung durch den erfindungsgemäßen Zweiradsattel entlang der Linie II-II in Fig. 3 durch eine Öffnung in der Satteldecke, und
- Fig. 5: einen Schnitt durch eine alternative Ausführung der Öffnung in dem erfindungsgemäßen Zweiradsattel.

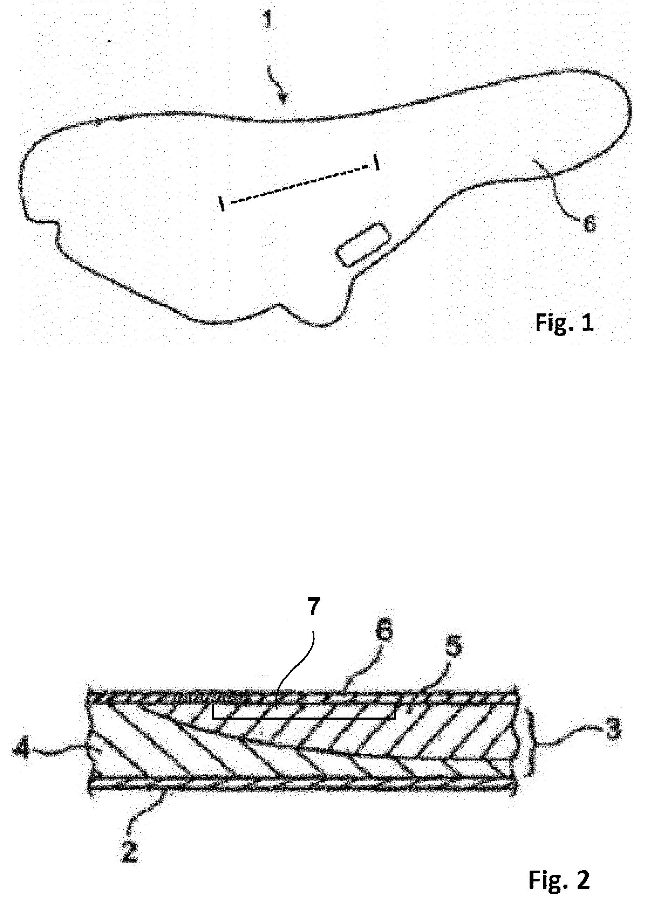

Fig. 1 zeigt eine perspektivische Ansicht eines Zweiradsattels 1 mit einer Satteldecke 6 und Fig. 2 zeigt einen Schnitt durch den Zweiradsattel entlang der Linie I-I in Fig. 1. In Fig. 2 ist eine Sattelschale 2 gezeigt, auf welche eine elastische Füllung 3 aufgebracht ist. In dem mittleren Bereich oder Sitzbereich des Zweiradsattels 1 weist die Füllung 3 eine untenliegende Füllschicht 4 und eine auf der Füllschicht 4 angeordnete Gelschicht 5 auf. In den Randbereichen des Zweiradsattels 1 wird die Füllung 3 nur von der Füllschicht 4 gebildet. Zwischen den Randbereichen und dem mittleren Bereich des Zweiradsattels 1 nimmt die Dicke der Gelschicht 5 zum Randbereich hin ab. Über der Füllung 3 befindet sich die in Fig. 2 waagerecht verlaufend dargestellte Satteldecke 6, unter der ein elektronischer ID-Transponderchip 7 angeordnet ist, der eine Antenne, einen analogen Schaltkreis zum Empfangen und Senden sowie eine Transponderschaltung und einen Datenspeicher aufweist. Die Transponderschaltung umfasst einen digitalen Schaltkreis, einen Mikrocontroller, der den Betrieb des ID-Transponderchips steuert.

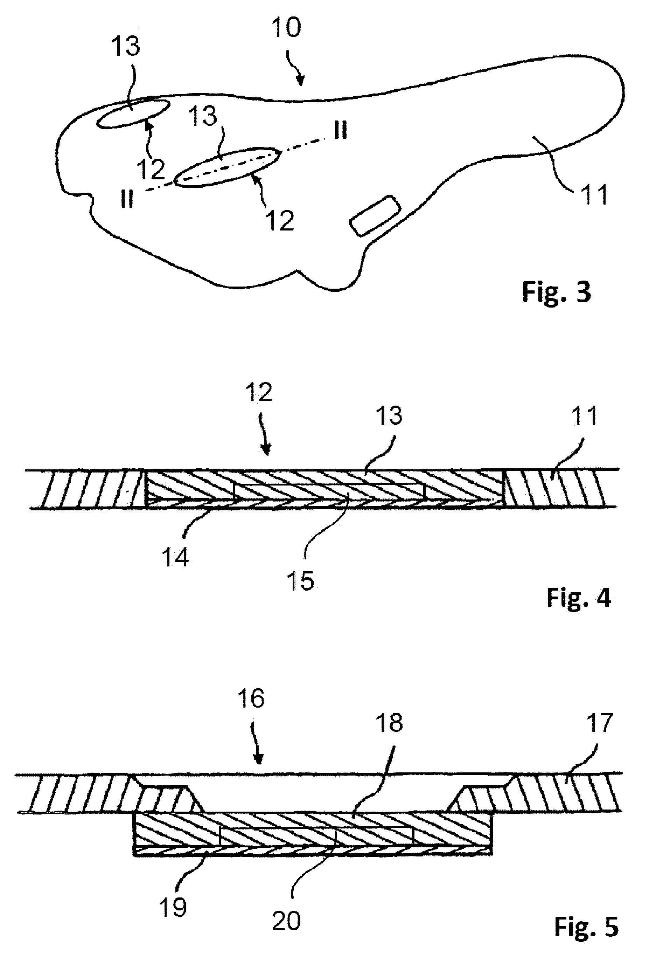

Fig. 3 zeigt eine perspektivische Ansicht eines Zweiradsattels 10 mit einer Satteldecke 11 und mit zwei in der Satteldecke 11 ausgebildeten Öffnungen 12. Die Öffnungen 12 sind in einem hinteren Bereich der Satteldecke 11 nebeneinander angeordnet, und sie sind durch eine Dekorfolie 13 verschlossen. Die Schnittlinie I-I verläuft in Sattel richtung nach vorne durch die erste der beiden Öffnungen 12 der Satteldecke 11.

In Fig. 4 ist eine der Öffnungen 12 in der Satteldecke 11 im Schnitt gezeigt. In der Öffnung 12 ist ein Abschnitt von Dekorfolie 13 eingesetzt oder eingeschweißt, der die gleichen Abmessungen wie die Öffnung 12 hat, und dessen Dicke mit der Schichtdicke der Satteldecke 11 in etwa übereinstimmt. Dementsprechend ist die Öffnung 12 von der Dekorfolie 13 verschlossen. Bei diesem Ausführungsbeispiel der Erfindung ist die Dekorfolie 13 passgenau in die Öffnung 12 der Satteldecke 11 eingebracht und befindet sich auf gleicher Höhe wie die Satteldecke 11, sodass der seitliche Rand der Dekorfolie 13 passgenau mit dem Rand der Satteldecke 11 abschließt. Der seitliche Rand der Dekorfolie 13 kann mit dem Rand der Satteldecke 11 verschweißt oder verklebt sein. In Fig. 4 ist die Füllschicht des Sattels nicht dargestellt.

Weiterhin weist die Dekorfolie 13 an ihrer Unterseite eine Deck- bzw. Grundschicht 14 auf, die als aufgeschweißte, als aufgeklebte oder anderweitig mit der Dekorfolie 13 verbundene Deckfolie oder Textilmaterial ausgebildet sein kann. Der elektronische ID-Transponderchip 15 ist zwischen der Dekorfolie 13 und der Grundschicht 14 angeordnet. Der elektronische ID-Transponderchip 15 entspricht dem elektronischen ID-Transponderchip 7 von Fig. 2.

Fig. 5 zeigt einen Schnitt durch eine Öffnung 16 der Satteldecke 17, wobei die Öffnung 16 dabei einen stufenförmig ausgebildeten Rand aufweist, und die Dekorfolie 18 befindet sich unterhalb der Öffnung 16 und ist an der Unterseite der Satteldecke 17 befestigt.

Die Öffnung 16 der Satteldecke 17 kann gemäß dem in Fig. 5 gezeigten Beispiel hergestellt werden, indem die Dekorfolie 18 von unten auf die Satteldecke 17 aufgeschweißt, aufgeklebt oder auflaminiert wird. Die Dekorfolie 18 kann dazu größere Abmessungen als die Öffnung 16 aufweisen. Auch bei diesem Ausführungsbeispiel weist die Dekorfolie 18 eine Grundschicht 19 auf, die ebenfalls als Lackschicht, als aufgeschweißte oder anderweitig mit der Dekorfolie 8 verbundene Deckfolie oder als Textilmaterial ausgebildet sein kann. Der elektronische ID-Transponderchip 20 ist zwischen der Dekorfolie 18 und der Grundschicht 19 angeordnet. Der elektronische ID-Transponderchip 20 entspricht wiederum dem elektronischen ID-Transponderchip 7 von Fig. 2.

## Patentansprüche

1. Zweiradsattel mit einer Schale (2), mit einer darüber angeordneten elastischen Füllung (3) und mit einer Satteldecke (6), die die elastische Füllung (3) abdeckt, **dadurch gekennzeichnet, dass** zwischen der Satteldecke (6; 11; 17) und der elastischen Füllung (3) ein elektronischer ID-Transponderchip (7; 15; 20) mit einer Antenne, einem Datenspeicher und einer Transponderschaltung angeordnet ist.

2. Zweiradsattel nach Anspruch 1, **dadurch gekennzeichnet, dass** der elektronische ID-Transponderchip (7; 15; 20) ein vorzugsweise passiver RFID-Transponderchip (7; 15; 20) ist.

3. Zweiradsattel nach Anspruch 1, **dadurch gekennzeichnet, dass** der elektronische ID-Transponderchip (7; 15; 20) ein vorzugsweise passiver NFC-Transponderchip (7; 15; 20) ist.

4. Zweiradsattel nach Anspruch 1, 2 oder 3, **dadurch gekennzeichnet, dass** der Datenspeicher des ID-Transponderchips (7; 15; 20) einen Link-Speicherbereich aufweist, in dem eine Link-Information zu einer Webpage gespeichert ist.

5. Zweiradsattel nach Anspruch 4, **dadurch gekennzeichnet, dass** die Link-Information zu einer Webpage durch ein Mobil-Kommunikationsgerät auszulesen und zu nutzen ist, um die Webpage aufzurufen.

6. Zweiradsattel nach Anspruch 4, **dadurch gekennzeichnet, dass** der Speicher des Weiteren einen Produktinformations-Speicherbereich aufweist, in dem eine auf den Zweiradsattel bezogene Produktinformation gespeichert ist.

7. Zweiradsattel nach Anspruch 1, **dadurch gekennzeichnet, dass** der elektronische ID-Transponderchip (7; 15; 20) an einer vordefinierten Stelle unter der Satteldecke, beispielsweise im Sitzbereich des Zweiradsattels, angeordnet ist.

8. Zweiradsattel nach einem der Ansprüche 1 bis 6, wobei die Satteldecke (11; 17) mindestens eine Öffnung (12; 16) aufweist, die durch eine dekorative Dekorfolie (13; 18) verschlossen ist, und wobei eine Deckschicht (19) auf der der elastischen Füllung zugewandten Seite der Dekorfolie (13; 18) vorgesehen ist, **dadurch gekennzeichnet dass** der elektronische ID-Transponderchip (15; 20) zwischen der transparenten Dekorfolie (13, 18) und der Deckschicht (14; 19) angeordnet ist.

9. Zweiradsattel nach Anspruch 8, **dadurch gekennzeichnet, dass** die Deckschicht (14; 19) der Dekorfolie (13; 18) eine Lackschicht, eine mit der Dekorfolie verbundene Deckfolie, eine PVC-, PP- oder PE-Folie oder ein Textilmaterial ist.

10. Zweiradsattel nach Anspruch 8, **dadurch gekennzeichnet, dass** die Dekorfolie (13) passgenau in die Öffnung (12) der Satteldecke (11) eingebracht ist und sich auf gleicher Höhe wie die Satteldecke (11) befindet.

11. Zweiradsattel nach Anspruch 8, **dadurch gekennzeichnet, dass** die Dekorfolie (18) unterhalb der Öffnung (16) der Satteldecke (17) angeordnet und an der Unterseite der Satteldecke (17) befestigt ist.
